# FASCICULE DE BREVET EUROPEEN

(11) **EP 3 104 566 B1**
(45) Date de publication et mention de la délivrance du brevet: **30.06.2021**
(21) Numéro de dépôt: 16169233.0
(22) Date de dépôt: 11.05.2016
(51) Int. Cl.: H04L 27/00, H04B 3/54, H04L 1/00, H04L 1/18

(54) **PROCÉDÉ DE SÉLECTION D'UNE MODULATION LORS DE TRANSMISSIONS DE TRAMES PAR COURANTS PORTEURS EN LIGNE**
AUSWAHLVERFAHREN EINER MODULATION BEI ÜBERTRAGUNGEN VON FRAMES ÜBER ONLINE-TRÄGERSTRÖME
METHOD FOR SELECTING A MODULATION DURING FRAME TRANSMISSIONS BY POWER LINE CARRIERS

(30) Priorité: 12.05.2015 FR 1554270
(43) Date de publication de la demande: 14.12.2016
(73) Titulaire: SAGEMCOM ENERGY & TELECOM SAS, 92500 Rueil-Malmaison (FR)
(72) Inventeur: TEBOULLE, Henri, 92500 RUEIL MALMAISON (FR)
(74) Mandataire: Cabinet Le Guen Maillet

(56) Documents cités:
- EP-A2- 2 276 188
- WO-A1-2012/018833
- US-B2- 7 773 498
- QUALCOMM EUROPE: "Redundancy Version and Modulation Order for Synchronous HARQ", 3GPP DRAFT; R1-060175, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Helsinki, Finland; 20060123 - 20060125 19 janvier 2006 (2006-01-19), XP050951005, Extrait de l'Internet: URL:http://www.3gpp.org/ftp/tsg_ran/WG1_RL 1/TSGR1_AH/LTE_AH_0601/Docs/ [extrait le 2006-01-19]
- None

## Description

Procédé de sélection d'une modulation à utiliser lors d'une transmission d'une trame par un dispositif réseau, ladite transmission utilisant un protocole de transmission par courants porteurs en ligne, et un dispositif mettant en œuvre ledit procédé.

Les communications par courants porteurs en ligne (CPL) (« PowerLine Communications (PLC) » en terminologie anglo-saxonne) se développent, notamment dans le cadre des réseaux d'alimentation électrique de type AMM (Gestion de mesure automatique, « Automated Meter Management » en terminologie anglo-saxonne). Des réseaux de communication sont ainsi implémentés au-dessus de réseaux d'alimentation électrique pour la collecte automatisée, auprès de compteurs électriques intelligents (« smart meters » en anglais), de données de relevés de consommation énergétique. Les communications par courants porteurs utilisent, par exemple, des protocoles de communication CPL tels que le protocole G3-PLC (CPL de troisième génération: « Third Generation PLC » en terminologie anglo-saxonne. ITU-T G.9903) ou PRIME (Evolution des mesures intelligentes par courants porteurs, « PoweRline Intelligent Metering Evolution » en terminology anglo-saxonne).

Un principe des communications CPL consiste à superposer à un signal d'alimentation électrique alternatif, appelé *signal porteur* ou *porteuse,* un signal d'information de plus haute fréquence et de faible énergie représentatif de données à transmettre. Dans le protocole G3-PLC par exemple, le signal d'information peut utiliser les bandes de fréquences CENELEC A (allant de « 35 » KHz à « 91 » KHz) ou CENELEC B (allant de « 98 » KHz à « 122 » KHz) en Europe, la bande de fréquences ARIB (allant de « 155 » KHz à « 403 » KHz) au Japon et la bande de fréquences FCC (allant de « 155 » KHz à « 487 » KHz) aux Etats-Unis. Chaque bande de fréquences est en général divisée en sous-bandes, l'objectif de la division en sous-bandes étant de maximiser des performances de transmission dans des conditions de transmission variables et de permettre un partage de la bande de fréquences entre plusieurs communications parallèles. Chaque sous-bande est définie par une fréquence basse et une fréquence haute et par un nombre prédéfini de sous-porteuses (« subcarriers » ou « tones » en terminologie anglo-saxonne). A titre d'exemple, dans le protocole G3-PLC, la bande de fréquences CENELEC A est divisée en « 6 » sous-bandes, chaque sous-bande comportant « 6 » sous-porteuses. La bande CENELEC A comporte donc « 36 » sous-porteuses, dans le cas du protocole G3-PLC.

Les données à transmettre sont généralement transmises sous forme de trames. Afin de fiabiliser une transmission de trames entre deux dispositifs CPL adjacents dans un réseau CPL, les protocoles de communication CPL, comme par exemple le protocole G3-PLC, prévoient généralement une mise en œuvre régulière d'une procédure de recherche de sous-porteuses («Adaptive Tone Mapping (ATM) » en terminologie anglo-saxonne). La procédure de recherche de sous-porteuses permet de déterminer, pour chaque sous-porteuse définie par le protocole de communication CPL dans la bande de fréquences utilisée, si ladite sous-porteuse offre une fiabilité suffisante, pour chacune des modulations du protocole, selon un critère prédéterminé (sur la base du niveau du rapport signal sur bruit (« Signal to Noise Ratio (SNR) » en terminologie anglo-saxonne) comparé à un seuil (un seuil par modulation) pour lequel, lorsque le SNR est supérieur ou égal à ce seuil, les sous-porteuses sont considérées comme ayant une fiabilité suffisante pour une transmission pour une modulation donnée, pour permettre des transmissions de trames.

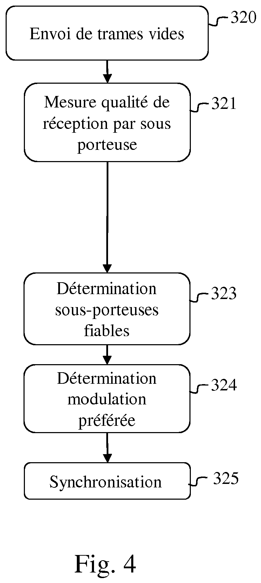

La **Fig.4** illustre schématiquement une procédure de recherche de sous-porteuses selon le protocole G3-PLC.

Cette procédure débute par un envoi, lors d'une étape 320 d'une trame ne contenant pas de données utiles, dites trames vides, par un des deux dispositifs CPL, dit dispositif émetteur.

Lors d'une étape 321, lorsque l'autre dispositif CPL, dit dispositif récepteur, reçoit ladite trame, il mesure une qualité de réception de ladite trame par sous-porteuse.

Le dispositif récepteur peut alors déterminer, lors d'une étape 323, quelles sous-porteuses offrent une fiabilité suffisante.

Suite à la détermination des sous-porteuses fiables, dans une étape 324, le dispositif récepteur détermine une modulation préférée en fonction desdites sous-porteuses fiables. La modulation préférée est déterminée à partir d'un ensemble de modulations définies par le protocole de communication CPL. Par exemple, dans le cadre du protocole G3-PLC, dans la bande de fréquences CENELEC A, le protocole G3-PLC définit une liste de modulations en mode cohérent comprenant quatre modulations :
- 8PSK (Modulation par changement de phase à huit valeurs de phase possibles, « 8 Phase Shift Keying » en terminologie anglo-saxonne)
- QPSK (Modulation par changement de phase à 4 valeurs de phase possibles (aussi appelée modulation par changement de phase quadratique), « Quadratic Phase Shift Keying » en terminologie anglo-saxonne).
- BPSK (Modulation par changement de phase à 2 valeurs de phase possibles (aussi appelée modulation par changement de phase binaire), « Binary Phase Shift Keying » en terminologie anglo-saxonne).
- ROBUST (Modulation robuste, « Robust modulation » en terminologie anglo-saxonne).
et une liste de modulations en mode différentiel comprenant quatre modulations :
- D8PSK (Modulation différentielle par changement de phase à huit valeurs de phase possibles, « Differential 8 Phase Shift Keying » en terminologie anglo-saxonne)
- DQPSK (Modulation différentielle par changement de phase à 4 valeurs de phase possibles (aussi appelée modulation différentielle par changement de phase quadratique), « Differential Quadratic Phase Shift Keing » en terminologie anglo-saxonne).
- DBPSK (Modulation différentielle par changement de phase à 2 valeurs de phase possibles (aussi appelée modulation différentielle par changement de phase binaire), « Differential Binary Phase Shift Keing » en terminologie anglo-saxonne).
- ROBUST

Dans la bande de fréquence FCC, le protocole G3-PLC définit une liste de modulations en mode cohérent comprenant cinq modulations :
- 16-QAM (Modulation d'amplitude en quadrature 16, « 16 Quadrature Amplitude Modulation » en terminologie anglo-saxonne)
- 8PSK
- QPSK
- BPSK
- ROBUST
   et une liste de modulations en mode différentiel comprenant quatre modulations :
- D8PSK
- DQPSK
- DBPSK
- ROBUST

Lorsque les sous-porteuses offrant une fiabilité suffisante, dites sous-porteuses fiables, ainsi que la modulation préférée, ont été déterminées, le dispositif récepteur met en œuvre, lors d'une étape 325, une procédure de synchronisation de sous-porteuses et de la modulation préférée, afin que les deux dispositifs CPL partagent la connaissance des sous-porteuses fiables et de la modulation préférée à utiliser, en envoyant une trame au dispositif émetteur.

Dans le cadre du protocole G3-PLC, chaque transmission d'une trame entre deux dispositifs CPL adjacents d'un réseau CPL applique une procédure de transmission robuste permettant, en cas d'échec de ladite transmission, de réitérer ladite transmission jusqu'à un nombre maximum de transmissions successives *MAX_N_{T}.* Le protocole G3-PLC fixe une valeur par défaut du nombre maximum de transmissions successives *MAX_N_{T}* égale à la valeur « 5 ». Le protocole G3-PLC permet toutefois de donner une valeur différente à ce paramètre. Ainsi, si une trame n'a pas été correctement reçue par un dispositif CPL récepteur, elle peut être retransmise. Chaque transmission utilise les sous-porteuses fiables et la modulation préférée déterminées lors de la dernière mise en œuvre de la procédure de recherche de sous-porteuses décrite en relation avec la Fig. 4. Si, après un nombre *MAX_N_{T}* de transmissions successives d'une même trame, la trame n'est pas correctement reçue par son destinataire, les communications entre les deux dispositifs CPL sont considérées en échec. Cette situation entraîne généralement des détachements de certains dispositifs CPL du réseau CPL, et, à terme, peut entraîner une reconfiguration du réseau.

Une reconfiguration d'un réseau CPL, afin d'y rattacher des dispositifs CPL déconnectés, est un processus long. Pendant ce processus, seules des données permettant la reconfiguration du réseau CPL sont échangées avec les dispositifs CPL déconnectés du réseau CPL. Des données, dites *utiles,* autres que les données permettant la reconfiguration, ne peuvent être échangées dans le réseau pendant chaque période correspondant à une reconfiguration concernant les dispositifs déconnectés. Lorsque, par exemple, le réseau CPL est de type AMM, la collecte de données de relevés de consommation énergétique auprès de compteurs électriques du réseau CPL s'avère impossible pendant la reconfiguration pour les dispositifs déconnectés. Par conséquent, plus un réseau CPL de type AMM subit des reconfigurations, plus il devient difficile à gérer pour un opérateur de fourniture d'énergie électrique. En effet, l'opérateur de fourniture d'énergie électrique n'est pas assuré de pouvoir collecter les données de relevés de consommation énergétique au moment où il le souhaite.

Le document de Qualcomm Europe intitulé « Redundancy Version and modulation order for synchronous HARQ », 3GPP draft, décrit une réduction d'ordre d'une modulation pour des retransmissions futures.

La demande de brevet WO 2012/018833 décrit un procédé d'allocation dynamique de bits.

La demande de brevet EP 2 276 188 décrit un système de communication sans fil qui utilise une modulation et un codage adaptatifs.

Le brevet US 7 773 498 décrit un émetteur configuré pour changer une règle de modulation de telle sorte à réussir la transmission d'un paquet vers un dispositif récepteur.

Il est souhaitable de pallier cet inconvénient de l'état de la technique.

Il est notamment souhaitable de proposer une solution permettant de limiter les périodes pendant lesquelles aucune donnée utile ne peut être transmise dans le réseau CPL pour certains dispositifs. Dans le cadre des réseaux CPL de type AMM, il est souhaitable de limiter les périodes pendant lesquelles un opérateur de fourniture d'énergie électrique ne peut pas collecter des données de relevés de consommation énergétique pour certains dispositifs.

Il est notamment souhaitable de fournir une solution qui soit simple à mettre en œuvre et à faible coût.

Selon un premier aspect de la présente invention, la présente invention concerne un procédé de sélection d'une modulation à utiliser lors d'une transmission d'une trame entre un premier et un second dispositifs réseau, ladite transmission utilisant un protocole de communication par courants porteurs en ligne, les premier et second dispositifs réseau mettant régulièrement en œuvre une procédure de recherche de sous-porteuses permettant de déterminer, pour chaque sous-porteuse d'un ensemble de sous-porteuses définies par ledit protocole dans une bande de fréquences utilisée pour ladite transmission, si ladite sous-porteuse offre une fiabilité suffisante selon un critère prédéterminé pour permettre des transmissions de trames, et de déterminer une modulation préférée en fonction desdites sous-porteuses offrant une fiabilité suffisante, chaque transmission d'une trame appliquant une procédure de transmission robuste permettant, en cas d'échec de ladite transmission, de réitérer ladite transmission jusqu'à un nombre maximum de transmissions successives, le procédé comprenant les étapes suivantes pour chaque transmission d'une même trame dans le cadre de la procédure de transmission robuste : déterminer un nombre de transmissions effectuées pour ladite trame ; obtenir une liste ordonnée de modulations, comprenant au moins deux modulations différentes, adaptée à la modulation préférée, ladite liste étant ordonnée de sorte qu'une première modulation précédant une seconde modulation dans la liste assure une robustesse à des erreurs de transmission inférieure ou égale à la seconde modulation, chaque modulation de ladite liste assurant une robustesse aux erreurs de transmission au moins égale à la robustesse de la modulation préférée ; et, sélectionner une modulation de ladite liste ayant un rang égal audit nombre de transmissions.

De cette manière, si la modulation préférée ne permet pas de transmettre la trame, au moins une autre modulation de robustesse supérieure à la modulation préférée peut être sélectionnée dans le cadre de la procédure de transmission robuste. On réduit ainsi une probabilité que la trame ne puisse être envoyée et donc une probabilité qu'une reconfiguration du réseau soit lancée.

Selon un mode de réalisation, suite à une transmission réussie d'une trame utilisant une modulation sélectionnée, si la modulation sélectionnée est différente de la modulation assurant une robustesse minimale de ladite liste, ladite liste est modifiée de sorte que chaque modulation de rang inférieur au rang minimal de la modulation sélectionnée dans ladite liste est remplacée par une modulation de l'ensemble de modulations définies par ledit protocole assurant une robustesse aux erreurs de transmission au moins égale à la robustesse de la modulation préférée et au plus égale à la robustesse de la modulation sélectionnée.

De cette manière, la liste de modulations est modifiée en fonction des transmissions de trames effectuées, ce qui permet d'accéder plus rapidement à une modulation permettant la transmission d'une trame.

Selon un mode de réalisation, chaque modulation sélectionnée est mémorisée et ladite liste est modifiée en prenant en compte au moins une des modulations sélectionnées mémorisées.

Mémoriser les modulations sélectionnées permet de garder en mémoire les modulations ayant permis de transmettre des trames et ainsi de prendre en compte les modulations sélectionnées mémorisées lors des modifications d'une liste de modulations.

Selon un mode de réalisation, la modulation de l'ensemble de modulations définies par ledit protocole assurant une robustesse aux erreurs de transmission au moins égale à la robustesse de la modulation préférée et au plus égale à la robustesse de la modulation sélectionnée est la dernière modulation mémorisée ou une modulation déterminée à partir de statistiques calculées sur des modulations sélectionnées mémorisées.

Selon un mode de réalisation, au moins une modulation de ladite liste apparaît une pluralité de fois dans ladite liste.

De cette manière, il est possible de privilégier certaines modulations par rapport à d'autres.

Selon un mode de réalisation, suite à chaque mise en œuvre de la procédure de recherche de sous-porteuses, ladite liste est réinitialisée de sorte que chaque modulation définie par ledit protocole assurant une robustesse aux erreurs de transmission au moins égale à la robustesse de la modulation préférée apparaisse au moins une fois dans ladite liste.

La réinitialisation de la liste permet de faire apparaître dans la liste toutes les modulations possibles et ainsi de faire en sorte que chaque modulation possible ait une chance d'être testée.

Selon un mode de réalisation, ledit protocole est le protocole G3-PLC.

Selon un deuxième aspect de l'invention, l'invention concerne un dispositif pour sélectionner une modulation à utiliser lors d'une transmission d'une trame entre un premier et un second dispositifs réseau, ladite transmission utilisant un protocole de communication par courants porteurs en ligne, les premier et second dispositifs réseau mettant régulièrement en œuvre une procédure de recherche de sous-porteuses permettant de déterminer, pour chaque sous-porteuse d'un ensemble de sous-porteuses définies par ledit protocole dans une bande de fréquences utilisée pour ladite transmission, si ladite sous-porteuse offre une fiabilité suffisante selon un critère prédéterminé pour permettre des transmissions de trames, et de déterminer une modulation préférée en fonction desdites sous-porteuses offrant une fiabilité suffisante, chaque transmission d'une trame appliquant une procédure de transmission robuste permettant, en cas d'échec de ladite transmission, de réitérer ladite transmission jusqu'à un nombre maximum de transmissions successives, le dispositif comprenant les moyens suivants : des moyens de détermination pour déterminer un nombre de transmissions effectuées pour ladite trame ; des moyens d'obtention pour obtenir une liste ordonnée de modulations, comprenant au moins deux modulations différentes, adaptée à la modulation préférée, ladite liste étant ordonnée de sorte qu'une première modulation précédant une seconde modulation dans la liste assure une robustesse à des erreurs de transmission inférieure ou égale à la seconde modulation, chaque modulation de ladite liste assurant une robustesse aux erreurs de transmission au moins égale à la robustesse de la modulation préférée ; et, des moyens de sélection pour sélectionner une modulation de ladite liste ayant un rang égal audit nombre de transmissions.

Selon un troisième aspect de la présente invention, la présente invention concerne un programme d'ordinateur, comprenant des instructions pour mettre en œuvre, par un dispositif, le procédé selon le premier aspect, lorsque ledit programme est exécuté par un processeur dudit dispositif.

Selon un quatrième aspect de la présente invention, la présente invention concerne des moyens de stockage, stockant un programme d'ordinateur comprenant des instructions pour mettre en œuvre, par un dispositif, le procédé selon le premier aspect, lorsque ledit programme est exécuté par un processeur dudit dispositif.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la Fig. 1 illustre schématiquement un contexte dans lequel l'invention peut être mise en œuvre ;
- la Fig. 2 illustre schématiquement un exemple d'architecture matérielle d'un dispositif adapté pour la mise en œuvre de l'invention. ;
- la Fig. 3 illustre schématiquement un procédé de transmission d'une trame selon l'invention;
- la Fig. 4 illustre schématiquement une procédure de recherche de sous-porteuses selon le protocole G3-PLC;
- la Fig. 5 illustre schématiquement une procédure de transmission robuste d'une trame selon l'invention;

L'invention est décrite par la suite dans un contexte d'une communication CPL entre deux dispositifs CPL d'un réseau CPL de type AMM utilisant le protocole G3-PLC. Toutefois l'invention s'applique dans un contexte plus large de communication CPL utilisant un protocole de communication CPL préconisant d'une part une mise en œuvre régulière d'une procédure de recherche de sous-porteuses similaires à celle du protocole G3-PLC et d'autre part, qu'en cas d'échec d'une transmission, une trame puisse être transmise plusieurs fois. Par ailleurs, l'invention peut être mise en œuvre par chaque dispositif du réseau CPL. De plus, l'invention s'applique à d'autres types de réseaux CPL, tels que, par exemple, des réseaux CPL domestiques permettant des échanges de données multimédia par communication CPL entre des dispositifs de communication connectés audit réseau CPL.

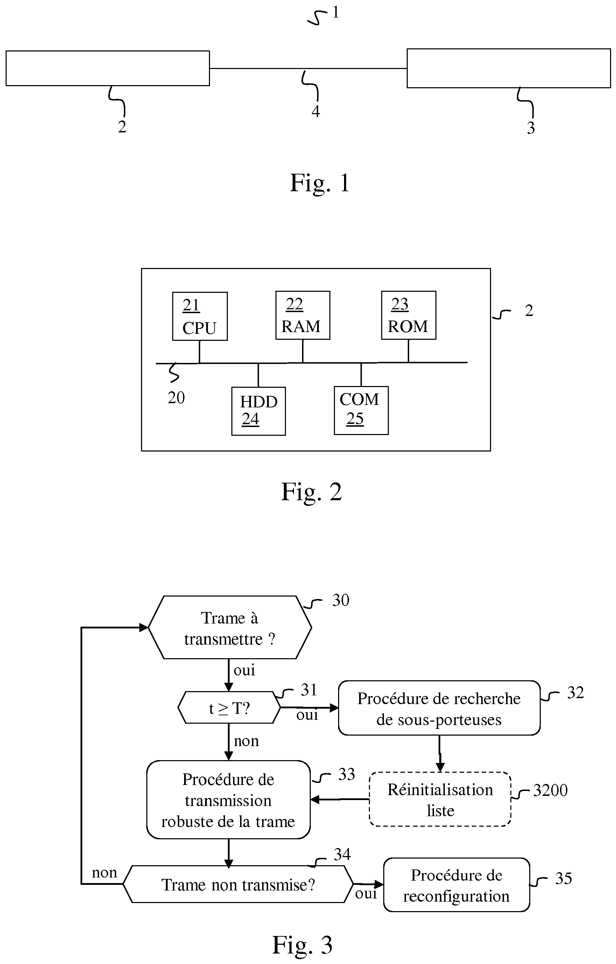

La **Fig. 1** illustre schématiquement un contexte dans lequel l'invention peut être mise en œuvre. La Fig. 1 représente deux dispositifs CPL 2 et 3 d'un réseau CPL 1 de type AMM. Ces deux dispositifs CPL 2 et 3 peuvent être deux compteurs électriques ou un concentrateur de données (« data concentrator » en terminologie anglo-saxonne) et un compteur électrique. Les deux dispositifs CPL 2 et 3 sont reliés par un câble électrique 4. Le réseau CPL 1 peut comporter d'autres dispositifs CPL non représentés, au moins deux dispositifs CPL adjacents du réseau CPL 1 étant aptes à mettre en œuvre l'invention.

La **Fig. 2** illustre schématiquement un exemple d'architecture matérielle adapté pour la mise en œuvre de l'invention. Dans la Fig. 2, nous considérons que le dispositif adapté pour la mise en œuvre de l'invention est le dispositif CPL 2. Le dispositif adapté pour la mise en œuvre de l'invention pourrait aussi être le dispositif CPL 3 ou un module intégré dans le dispositif 2 et/ou le dispositif 3.

Selon l'exemple d'architecture matérielle représenté à la Fig. 2, le dispositif CPL 2 comprend alors, reliés par un bus de communication 20 : un processeur ou CPU (« Central Processing Unit » en anglais) 21 ; une mémoire vive RAM (« Random Access Memory » en anglais) 22 ; une mémoire morte ROM (« Read Only Memory » en anglais) 23 ; une unité de stockage telle qu'un disque dur ou un lecteur de support de stockage, tel qu'un lecteur de cartes SD (« Secure Digital » en anglais) 24 ; au moins une interface de communication 25 permettant au dispositif CPL 2 de communiquer avec d'autres dispositifs CPL du réseau 1 comme par exemple le dispositif CPL 3.

Le processeur 21 est capable d'exécuter des instructions chargées dans la RAM 22 à partir de la ROM 23, d'une mémoire externe (non représentée), d'un support de stockage (tel qu'une carte SD), ou d'un réseau de communication. Lorsque le dispositif CPL 2 est mis sous tension, le processeur 21 est capable de lire de la RAM 22 des instructions et de les exécuter. Ces instructions forment un programme d'ordinateur causant la mise en œuvre, par le processeur 21, d'une partie des étapes du procédé décrit ci-après en relation avec les Figs. 3, 4 et 5.

Le procédé décrit en relation avec les Figs. 3, 4 et 5 peut être implémenté sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais).

La **Fig.3** illustre schématiquement un procédé de transmission d'une trame selon l'invention mis en œuvre par le dispositif CPL 2. Lors d'une étape 30, le dispositif CPL 2 vérifie si une trame doit être transmise au dispositif CPL 3. Si ce n'est pas le cas, le dispositif CPL 2 se met en attente d'une trame à transmettre.

Si une trame doit être transmise, le dispositif CPL 2 met en œuvre une étape 31. Par la suite, nous appelons la trame devant être transmise, trame courante. Afin de se conformer au protocole G3-PLC, le dispositif CPL 2 lance à intervalles réguliers la procédure de recherche de sous-porteuses spécifiée par le protocole G3-PLC. A chaque lancement de la procédure de recherche de sous-porteuses, le dispositif CPL 2 démarre une horloge. Cette horloge permet au dispositif CPL 2 de déterminer combien de temps s'est écoulé depuis la dernière mise en œuvre de la procédure de recherche de sous-porteuses. Lors de l'étape 31, le dispositif CPL 2 obtient la valeur t de ladite horloge et compare la valeur *t* à une durée *T* correspondant à une durée maximale entre deux lancements de la procédure de recherche de sous-porteuses. Si la valeur t est supérieure ou égale à la durée *T,* le dispositif CPL 2 met en œuvre la procédure de recherche de sous-porteuses décrite plus haut en relation avec la Fig. 4. Sinon, le dispositif CPL 2 met en œuvre une étape 33 de transmission de la trame.

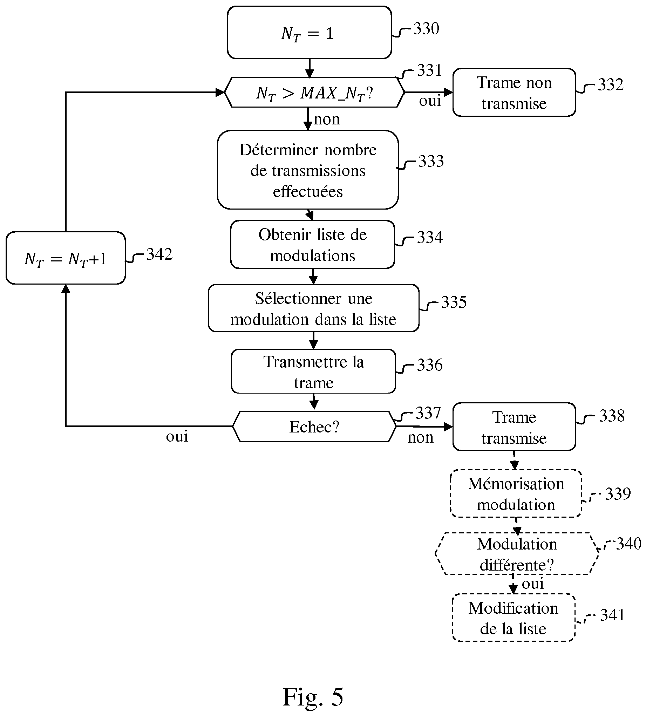

Lors de l'étape 33, le dispositif CPL applique une procédure de transmission robuste de trame selon l'invention à la trame courante. La procédure de transmission robuste de trame selon l'invention est décrite par la suite en relation avec la Fig. 5.

Lors d'une étape 34, le dispositif CPL 2 vérifie si la trame courante a été transmise correctement au dispositif CPL 3. Si la trame courante a été transmise correctement, le dispositif CPL 2 met de nouveau en œuvre l'étape 30 déjà expliquée. Si la transmission de la trame courante a échoué, malgré l'application de la procédure de transmission robuste de trame selon l'invention, le dispositif CPL 2 considère, lors d'une étape 35 que les communications CPL avec le dispositif CPL 3 sont impossibles. Dans ce cas, une procédure de reconfiguration du réseau CPL 1 peut être lancée.

La **Fig. 5** illustre schématiquement une procédure de transmission robuste de trame selon l'invention mise en œuvre par le dispositif CPL 2.

Lors d'une étape 330, le dispositif CPL 2 initialise une variable *N_{T}* à la valeur « 1 ». La variable *N_{T}* permet de compter un nombre de transmissions effectuées pour la trame courante.

Dans une étape 331, le dispositif CPL 2 compare la variable *N_{T}* au nombre maximum de transmissions successives *MAX_N_{T}.* Si *N_{T} > MAX_N_{T},* la procédure de transmission robuste de trame appliquée à la trame courante prend fin lors d'une étape 332. Un nombre de tentatives de transmission de la trame courante égal au nombre maximum de transmissions successives *MAX_N_{T}* n'a pas permis de transmettre la trame courante. La transmission de la trame courante a donc échoué, ce qui conduit à une mise en œuvre de l'étape 35 déjà expliquée.

Si *N_{T} ≤ MAX_N_{T}* le dispositif CPL 2 détermine, lors de l'étape 333, un nombre de transmissions effectuées pour la trame courante. Pour cela, le dispositif CPL 2 consulte la variable *N_{T}.*

Les dispositifs CPL 2 et 3 stockent en mémoire une liste identique de modulations pour chaque modulation préférée possible. Chaque modulation de chaque liste de modulations est tirée de l'ensemble de modulations définies par le protocole G3-PLC pour la bande de fréquences utilisée en prenant en compte le mode de modulation utilisé (mode cohérent ou mode différentiel). Par exemple, pour la bande de fréquences CENELEC A en mode cohérent, les modulations de chaque liste de modulations appartiennent à un ensemble comprenant la modulation 8PSK, la modulation QPSK, la modulation BPSK et la modulation ROBUST. Chaque liste de modulations est ordonnée de sorte qu'une première modulation précédant une seconde modulation dans la liste assure une robustesse à des erreurs de transmission inférieure ou égale à la seconde modulation. Par ailleurs, chaque modulation de ladite liste assure une robustesse aux erreurs de transmission au moins égale à la robustesse de la modulation préférée.

Dans une étape 334, le dispositif CPL 2 obtient, à partir des listes de modulations qu'il stocke en mémoire, une liste de modulations adaptée à la modulation préférée déterminée lors de la dernière mise en œuvre de la procédure de recherche de sous-porteuses.

Dans un mode de réalisation, lorsqu'on parle de deux modulations offrant une robustesse aux erreurs de transmission égale, il s'agit d'une seule et même modulation de l'ensemble des modulations définies par le protocole de communication CPL.

Chaque liste de modulations est de longueur au moins égale au nombre maximum de transmissions successives *MAX_N_{T}.* Par conséquent, chaque liste de modulations comporte un nombre de modulations au moins égal au nombre maximum de transmissions successives *MAX_N_{T}.* Dans un mode de réalisation, le nombre maximum de transmission successives *MAX_N_{T}* est fixé à la valeur « 7 » et chaque liste de modulations comporte un nombre de modulations égal au nombre maximum de transmissions successives *MAX_N_{T}.*

**TAB 1A**

| Rang | Modulation |
|---|---|
| 1 | 8PSK |
| 2 | 8PSK |
| 3 | 8PSK |
| 4 | QPSK |
| 5 | BPSK |
| 6 | BPSK |
| 7 | ROBUST |

**TAB 2A**

| Rang | Modulation |
|---|---|
| 1 | QPSK |
| 2 | QPSK |
| 3 | BPSK |
| 4 | BPSK |
| 5 | BPSK |
| 6 | ROBUST |
| 7 | ROBUST |

**TAB 3A**

| Rang | Modulation |
|---|---|
| 1 | BPSK |
| 2 | BPSK |
| 3 | BPSK |
| 4 | BPSK |
| 5 | BPSK |
| 6 | ROBUST |
| 7 | ROBUST |

**TAB4A**

| Rang | Modulation |
|---|---|
| 1 | ROBUST |
| 2 | ROBUST |
| 3 | ROBUST |
| 4 | ROBUST |
| 5 | ROBUST |
| 6 | ROBUST |
| 7 | ROBUST |

Le tableau TAB1A (respectivement les tableaux TAB2A, TAB3A et TAB4A) représente la liste de modulations utilisée par le dispositif CPL 2 lorsque la modulation préférée est la modulation 8PSK (respectivement QPSK, BPSK et ROBUST). Chaque liste de modulations est représentée sous forme de deux colonnes. Une colonne *Rang* indique le rang dans la liste de modulations de chaque modulation indiquée dans une colonne *Modulation.* On constate de plus que chaque liste de modulations est ordonnée par ordre de modulation offrant une robustesse aux erreurs de transmission croissante. En effet, il est connu que la modulation 8PSK offre une robustesse aux erreurs de transmission plus faible que la modulation QPSK, la modulation QPSK offrant une robustesse aux erreurs de transmission plus faible que la modulation BPSK et la modulation BPSK offrant une robustesse aux erreurs de transmission plus faible que la modulation ROBUST.

On peut remarquer que certaines modulations sont répétées plusieurs fois dans chaque liste. Plus une modulation est répétée, plus cette modulation a des chances d'être sélectionnée. Répéter une modulation permet donc de privilégier certaines modulations par rapport à d'autres.

On note par ailleurs que le tableau TAB4A correspond à un cas particulier puisqu'il revient à permettre de répéter un nombre de fois égal à *MAX_N_{T}* la transmission de la trame courante avec la modulation ROBUST. Toutefois, si à l'issue de la mise en œuvre de la procédure de recherche des sous-porteuses la modulation préférée est la modulation ROBUST et *a fortiori,* si la modulation ROBUST ne permet pas de transmettre une trame, on peut en déduire que, dans tous les cas, les communications CPL entre le dispositif CPL 2 et le dispositif CPL 3 seront au mieux difficiles, au pire, impossibles. Les autres listes de modulations représentées dans les tableaux TAB1A, TAB2A et TAB3A comprennent au moins deux modulations différentes.

Dans une étape 335, le dispositif CPL 2 sélectionne une modulation dans la liste de modulations ayant un rang égal au nombre de transmissions effectuées pour la trame courante correspondant à *N_{T}.* Par exemple, si la modulation préférée est 8PSK et *N_{T}* = 1, 2 ou 3, la modulation sélectionnée dans la liste de modulations est la modulation 8PSK. Si la modulation préférée est 8PSK et *N_{T}* = 4, la modulation sélectionnée dans la liste de modulations est la modulation QPSK. Si la modulation préférée est 8PSK et *N_{T}* = 5 ou 6, la modulation sélectionnée dans la liste de modulations est la modulation BPSK. Enfin, si la modulation préférée est 8PSK et *N_{T}* = 7, la modulation sélectionnée dans la liste de modulations est la modulation ROBUST.

Dans une étape 336, le dispositif CPL 2 transmet la trame courante au dispositif CPL 3 en utilisant la modulation sélectionnée.

Dans une étape 337, le dispositif CPL 2 détermine si la trame courante a été reçue par le dispositif CPL 3. Pour ce faire, le dispositif CPL 2 vérifie s'il a reçu un accusé de réception de la part du dispositif CPL 3 pour la trame courante.

Si un accusé de réception a été reçu pour la trame courante, le dispositif considère dans une étape 338 que la trame courante a été transmise correctement. Le dispositif CPL 2 met alors en œuvre l'étape 30 déjà expliquée.

Si aucun accusé de réception n'a été reçu pour la trame courante, le dispositif CPL 2 incrémente la variable *N_{T}* d'une unité dans une étape 342 et met de nouveau en œuvre l'étape 331 déjà expliquée.

Comme nous l'avons vu plus haut, le dispositif CPL 3 stocke en mémoire les mêmes listes de modulations que le dispositif CPL 2. Par ailleurs, le dispositif CPL 3 est capable de déterminer qu'une trame lui a été transmise par le dispositif CPL 2 et le nombre de transmissions effectuées pour ladite trame. Connaissant la modulation préférée suite à la dernière mise en œuvre de la procédure de recherche de sous-porteuses, le dispositif CPL 3 peut déduire quelle liste de modulations doit être utilisée, et, connaissant le nombre de transmissions effectuées pour une trame, quelle modulation a été sélectionnée dans la liste de modulations par le dispositif CPL 2 pour transmettre la dernière trame reçue. En d'autres termes, le dispositif CPL 3 met lui aussi en œuvre les étapes 333, 334 et 335 afin de déterminer la modulation sélectionnée par le dispositif CPL 2.

Dans un mode de réalisation, l'étape 338 est suivie d'une étape 340 et d'une étape 341. Lors de l'étape 340, le dispositif CPL 2 vérifie si la modulation sélectionnée correspond à la modulation assurant la robustesse aux erreurs de transmission minimale de la liste de modulations correspondant à la modulation préférée. Si c'est le cas, la procédure de transmission robuste de trame selon l'invention prend fin et le dispositif CPL 2 met en œuvre l'étape 30 déjà expliquée.

Si la modulation sélectionnée ne correspond pas à la modulation assurant la robustesse aux erreurs de transmission minimale de la liste de modulations correspondant à la modulation préférée, le dispositif CPL 2 met en œuvre l'étape 341 au cours de laquelle la liste de modulations correspondant à la modulation préférée est modifiée. Lors de cette modification, chaque modulation de ladite liste de rang inférieur au rang minimal de la modulation sélectionnée est remplacée par une modulation de l'ensemble des modulations définies par le protocole G3-PLC dans la bande de fréquences utilisée assurant une robustesse aux erreurs de transmission au moins égale à la robustesse de la modulation préférée et au plus égale à la robustesse de la modulation sélectionnée.

Par exemple, si la modulation préférée est la modulation 8PSK et que la liste de modulations est celle représentée dans le tableau TAB1A, la modulation de rang « 3 » de la liste de modulations, qui était la modulation 8PSK, est remplacée par la modulation QPSK. La liste de modulations correspondant à la modulation préférée 8PSK devient alors la liste représentée dans le tableau TAB1B :

**TAB1B**

| Rang | Modulation |
|---|---|
| 1 | 8PSK |
| 2 | 8PSK |
| 3 | QPSK |
| 4 | QPSK |
| 5 | BPSK |
| 6 | BPSK |
| 7 | ROBUST |

La liste de modulations modifiée remplace la liste de modulations précédemment stockée dans la mémoire du dispositif CPL 2 de sorte que, lors d'une prochaine mise en œuvre du processus de transmission robuste selon l'invention pour une transmission d'une trame, c'est cette liste de modulations qui est utilisée. De cette manière, lors de la prochaine mise en œuvre du processus de transmission robuste selon l'invention, le dispositif CPL 2 sélectionne plus rapidement la modulation QPSK. On utilise ainsi la connaissance de la modulation qui a fonctionné pour les transmissions de trame précédentes pour accélérer la transmission de nouvelles trames.

Si lors d'une prochaine mise en œuvre du processus de transmission robuste partant d'une liste de modulations correspondant à celle représentée dans le tableau TAB1B, la modulation sélectionnée est de nouveau la modulation QPSK, la liste de modulations est de nouveau modifiée par exemple tel que décrit dans le tableau TAB1C :

**TAB1C**

| Rang | Modulation |
|---|---|
| 1 | 8PSK |
| 2 | QPSK |
| 3 | QPSK |
| 4 | QPSK |
| 5 | BPSK |
| 6 | BPSK |
| 7 | ROBUST |

La liste de modulations ainsi modifiée remplace la liste de modulations précédemment stockée dans la mémoire du dispositif CPL 2. De cette manière, lors d'une prochaine transmission d'une trame, la modulation QPSK est choisie encore plus rapidement.

Dans un mode de réalisation, lors d'une modification d'une liste de modulations, chaque modulation de ladite liste de rang inférieur au rang minimal de la modulation sélectionnée est remplacée par la modulation sélectionnée. Si par exemple, la liste de modulations à modifier est la liste de modulations décrite en relation avec le tableau 1A et que la modulation sélectionnée est la modulation QPSK, la liste de modulations modifiée est celle décrite par le tableau TAB1D :

**TAB1D**

| Rang | Modulation |
|---|---|
| 1 | QPSK |
| 2 | QPSK |
| 3 | QPSK |
| 4 | QPSK |
| 5 | BPSK |
| 6 | BPSK |
| 7 | ROBUST |

De cette manière, lors d'une prochaine mise en œuvre du processus de transmission robuste, la modulation ayant fonctionné pour la transmission de la trame précédente est testée directement. La transmission effective de la trame courante au dispositif CPL 3 a donc des chances d'être accélérée.

Dans un mode de réalisation, lors d'une modification d'une liste de modulations, chaque modulation de ladite liste de rang inférieur au rang minimal de la modulation sélectionnée dans ladite liste est remplacée par la modulation de l'ensemble de modulations défini par le protocole G3-PLC dans la bande de fréquences utilisée assurant une robustesse aux erreurs de transmission immédiatement inférieure à la modulation sélectionnée. Si par exemple, la liste de modulations à modifier est la liste de modulations décrite en relation avec le tableau TAB1A et que la modulation sélectionnée est la modulation BPSK, la liste de modulations modifiée est celle décrite par le tableau TAB1D.

Dans le mode de réalisation dans lequel le dispositif CPL 2 met en œuvre les étapes 340 et 341, le dispositif CPL 3 met aussi en œuvre les étapes 340 et 341. De cette manière, si une liste de modulations est modifiée par le dispositif CPL 2, la même modification est appliquée par le dispositif CPL 3. Les listes de modulations stockées par les dispositifs CPL 2 et 3 sont ainsi constamment identiques.

Dans un mode de réalisation, une étape 339 est mise en œuvre suite à l'étape 338 et avant l'étape 340. Au cours de l'étape 339, la modulation sélectionnée est mémorisée. Dans ce mode de réalisation, lors de l'étape 341, la liste de modulations correspondant à la modulation préférée est modifiée en prenant en compte au moins une des modulations sélectionnées mémorisées.

Dans un mode de réalisation, chaque modulation de la liste de modulations correspondant à la modulation préférée de rang inférieur au rang minimal de la modulation sélectionnée dans ladite liste est remplacée par la dernière modulation sélectionnée mémorisée.

Dans un mode de réalisation, chaque modulation de la liste de modulations correspondant à la modulation préférée de rang inférieur au rang minimal de la modulation sélectionnée dans ladite liste est remplacée par une modulation déterminée à partir de statistiques calculées sur les modulations sélectionnées mémorisées. Par exemple, chaque modulation de la liste de modulations correspondant à la modulation préférée de rang inférieur au rang minimal de la modulation sélectionnée dans ladite liste est remplacée par la modulation sélectionnée ayant une probabilité d'occurrence la plus élevée parmi les « 10 » dernières modulations sélectionnées mémorisées, la modulation offrant la robustesse aux erreurs de transmission la plus faible étant choisie en cas de probabilités d'occurrence identiques.

Dans un mode de réalisation, suite à chaque mise en œuvre de la procédure de recherche de sous-porteuses décrite en relation avec la Fig. 4, chaque liste de modulations correspondant à une modulation préférée possible est réinitialisée lors d'une étape 3200, suivant l'étape 32 et précédant l'étape 33 déjà expliquées. Lors d'une réinitialisation d'une liste correspondant à une modulation préférée, chaque modulation définie par le protocole G3-PLC dans la bande de fréquences utilisée et assurant une robustesse aux erreurs de transmission au moins égale à la robustesse de la modulation préférée apparait au moins une fois dans la liste. Par exemple, lorsque la bande de fréquences utilisée est la bande de fréquences CENELEC A et que le mode de modulation utilisé est le mode cohérent, la liste correspondant à la modulation préférée 8PSK (respectivement QPSK, BPSK et ROBUST) est la liste décrite en relation avec le tableau TAB1A (respectivement TAB2A, TAB3A, TAB4A). Dans ce mode de réalisation, les modulations sélectionnées mémorisées lors de transmissions précédentes de trames sont supprimées de la mémoire des dispositifs CPL 2 et CPL 3.

Dans un mode de réalisation, chaque liste de modulations correspondant à une modulation préférée possible est réinitialisée indépendamment de la mise en œuvre de la procédure de recherche de sous-porteuses décrite en relation avec la Fig. 4. Les listes de modulations peuvent être réinitialisées à des instants déterminés aléatoirement ou périodiquement, en fonction d'un nombre prédéfini de trames envoyées entre deux réinitialisations.

On note que dans tous les modes de réalisation où le dispositif CPL2 modifie les listes de modulations qu'il stocke en mémoire, le dispositif CPL 3 met en œuvre les mêmes modifications sur les listes de modulations qu'il a lui-même en mémoire. Pour ce faire les dispositifs CPL 2 et CPL 3 utilisent la connaissance commune qu'ils ont des porteuses fiables utilisées, de la modulation préférée, et du nombre de transmissions mises en œuvre pour chaque trame émise par le dispositif CPL 2 et reçue par le dispositif CPL 3. De cette manière, les listes de modulations des dispositifs CPL 2 et 3 sont synchronisées. En d'autres termes, lorsque le dispositif CPL 2 met en œuvre les étapes 339, 340 et 341, le dispositif CPL 3 met en œuvre des étapes identiques.

Dans un mode de réalisation, lorsque le dispositif CPL 2 émet après un premier échec une deuxième trame directement avec la modulation ROBUST alors qu'en fonction de la liste de modulations courante, le récepteur CPL 3 s'attend à une autre modulation, le dispositif CPL 3 comprend qu'il s'agit d'une procédure de recherche de sous-porteuses initiée par le dispositif CPL 2.Le dispositif CPL 3 détermine alors les nouvelles sous-porteuses fiables et la nouvelle modulation préférée et transmet ces informations au dispositif CPL 2. Le dispositif CPL 2 comprend alors que la deuxième trame a bien été reçue par le dispositif CPL3, et les dispositifs CPL 2 et CPL 3 réinitialisent alors leurs listes de modulations respectives en fonction de ces nouvelles données.

## Revendications

1. Procédé de sélection d'une modulation à utiliser lors d'une transmission d'une trame entre un premier et un second dispositifs réseau (2, 3), ladite transmission utilisant un protocole de communication par courants porteurs en ligne, les premier et second dispositifs réseau (2, 3) mettant régulièrement en œuvre une procédure de recherche de sous-porteuses (32) permettant de déterminer, pour chaque sous-porteuse d'un ensemble de sous-porteuses définies par ledit protocole dans une bande de fréquence utilisée pour ladite transmission, si ladite sous-porteuse offre une fiabilité suffisante selon un critère prédéterminé pour permettre des transmissions de trames, et de déterminer une modulation préférée en fonction desdites sous-porteuses offrant une fiabilité suffisante, chaque transmission d'une trame appliquant une procédure de transmission robuste (33) permettant, en cas d'échec de ladite transmission, de réitérer ladite transmission jusqu'à un nombre maximum de transmissions successives, **caractérisé en ce que** :
le procédé comprend les étapes suivantes pour chaque transmission d'une même trame dans le cadre de la procédure de transmission robuste (33) :
déterminer (333) un nombre de transmissions effectuées pour ladite trame ;
obtenir (334) une liste de modulations, comprenant au moins deux modulations différentes, adaptée à la modulation préférée, ladite liste étant ordonnée de sorte qu'une première modulation précédant une seconde modulation dans la liste assure une robustesse à des erreurs de transmission inférieure ou égale à la seconde modulation, chaque modulation de ladite liste assurant une robustesse aux erreurs de transmission au moins égale à la robustesse de la modulation préférée ; et,
sélectionner (335) une modulation de ladite liste ayant un rang égal audit nombre de transmissions ;
et **en ce que**, lorsque, suite à une transmission réussie (336, 337, 338) d'une trame utilisant une modulation sélectionnée, si la modulation sélectionnée est différente (340) de la modulation assurant une robustesse minimale de ladite liste, ladite liste est modifiée (341) de sorte que chaque modulation de rang inférieur au rang minimal de la modulation sélectionnée dans ladite liste est remplacée par une modulation de l'ensemble de modulations définies par ledit protocole assurant une robustesse aux erreurs de transmission au moins égale à la robustesse de la modulation préférée et au plus égale à la robustesse de la modulation sélectionnée.

2. Procédé selon la revendication 1, **caractérisé en ce que** chaque modulation sélectionnée est mémorisée (339) et ladite liste est modifiée en prenant en compte au moins une des modulations sélectionnées mémorisées.

3. Procédé selon la revendication 2, **caractérisé en ce que** la modulation de l'ensemble de modulations définies par ledit protocole assurant une robustesse aux erreurs de transmission au moins égale à la robustesse de la modulation préférée et au plus égale à la robustesse de la modulation sélectionnée est la dernière modulation mémorisée ou une modulation déterminée à partir de statistiques calculées sur des modulations sélectionnées mémorisées.

4. Procédé selon l'une quelconque des revendications précédentes, **caractérisé en ce que** au moins une modulation de ladite liste apparaît une pluralité de fois dans ladite liste.

5. Procédé selon l'une quelconque des revendications précédentes, **caractérisé en ce que**, suite à chaque mise en œuvre de la procédure de recherche de sous-porteuses (32), ladite liste est réinitialisée de sorte que chaque modulation définie par ledit protocole assurant une robustesse aux erreurs de transmission au moins égale à la robustesse de la modulation préférée apparaisse au moins une fois dans ladite liste.

6. Procédé selon l'une quelconque des revendications précédentes, **caractérisé en ce que** ledit protocole est le protocole G3-PLC.

7. Dispositif (2, 3) pour sélectionner une modulation à utiliser lors d'une transmission d'une trame entre un premier et un second dispositifs réseau (2, 3), ladite transmission utilisant un protocole de communication par courants porteurs en ligne, le premier et le second dispositifs réseau (2, 3) mettant régulièrement en œuvre une procédure de recherche de sous-porteuses (32) permettant de déterminer, pour chaque sous-porteuse d'un ensemble de sous-porteuses définies par ledit protocole dans une bande de fréquence utilisée pour ladite transmission, si ladite sous-porteuse offre une fiabilité suffisante selon un critère prédéterminé pour permettre des transmissions de trames, et de déterminer une modulation préférée en fonction desdites sous-porteuses offrant une fiabilité suffisante, chaque transmission d'une trame appliquant une procédure de transmission robuste (33) permettant, en cas d'échec de ladite transmission, de réitérer ladite transmission jusqu'à un nombre maximum de transmissions successives, **caractérisé en ce que** le dispositif (2, 3) comprend les moyens suivants :
des moyens de détermination (333) pour déterminer un nombre de transmissions effectuées pour ladite trame ;
des moyens d'obtention (334) pour obtenir une liste ordonnée de modulations , comportant au moins deux modulations différentes, adaptée à la modulation préférée, ladite liste étant ordonnée de sorte qu'une première modulation précédant une seconde modulation dans la liste assure une robustesse à des erreurs de transmission inférieure ou égale à la seconde modulation, chaque modulation de ladite liste assurant une robustesse aux erreurs de transmission au moins égale à la robustesse de la modulation préférée ; et,
des moyens de sélection (335) pour sélectionner une modulation de ladite liste ayant un rang égal audit nombre de transmissions ;
et des moyens de modification (341), mis en œuvre lorsque, suite à une transmission réussie (336, 337, 338) d'une trame utilisant une modulation sélectionnée, la modulation sélectionnée est différente (340) de la modulation assurant une robustesse minimale de ladite liste, pour modifier ladite liste de sorte que chaque modulation de rang inférieur au rang minimal de la modulation sélectionnée dans ladite liste est remplacée par une modulation de l'ensemble de modulations définies par ledit protocole assurant une robustesse aux erreurs de transmission au moins égale à la robustesse de la modulation préférée et au plus égale à la robustesse de la modulation sélectionnée.

8. Programme d'ordinateur, **caractérisé en ce qu'**il comprend des instructions pour mettre en œuvre, par un dispositif (2, 3), le procédé selon l'une quelconque des revendications 1 à 6, lorsque ledit programme est exécuté par un processeur (21) dudit dispositif.

9. Moyens de stockage, **caractérisés en ce qu'**ils stockent un programme d'ordinateur comprenant des instructions pour mettre en œuvre, par un dispositif (2, 3), le procédé selon l'une quelconque des revendications 1 à 6, lorsque ledit programme est exécuté par un processeur (21) dudit dispositif.

## Patentansprüche

1. Verfahren zur Auswahl einer bei einer Übertragung eines Rahmens zwischen einer ersten und einer zweiten Netzvorrichtung (2, 3) zu verwendenden Modulation, wobei die Übertragung ein Powerline-Kommunikationsprotokoll verwendet, wobei die ersten und zweiten Netzvorrichtungen (2, 3) regelmäßig eine Suchprozedur von Unterträgern (32) durchführen, die es ermöglicht, für jeden Unterträger einer Einheit von durch das Protokoll definierten Unterträgern in einem für die Übertragung verwendeten Frequenzband zu bestimmen, ob der Unterträger eine ausreichende Zuverlässigkeit gemäß einem vorbestimmten Kriterium bietet, um Rahmenübertragungen zu erlauben, und eine bevorzugte Modulation abhängig von den eine ausreichende Zuverlässigkeit bietenden Unterträgern zu bestimmen, wobei jede Übertragung eines Rahmens eine robuste Übertragungsprozedur (33) anwendet, die im Fall des Scheiterns der Übertragung erlaubt, die Übertragung bis zu einer maximalen Anzahl von aufeinanderfolgenden Übertragungen zu wiederholen, **dadurch gekennzeichnet, dass**:
das Verfahren die folgenden Schritte für jede Übertragung eines gleichen Rahmens im Zuge der robusten Übertragungsprozedur (33) enthält:
Bestimmen (333) einer Anzahl für den Rahmen ausgeführter Übertragungen;
Erhalt (334) einer mindestens zwei unterschiedliche Modulationen enthaltenden Liste von Modulationen, die an die bevorzugte Modulation angepasst ist, wobei die Liste so geordnet ist, dass eine in der Liste vor einer zweiten Modulation liegende erste Modulation eine Robustheit gegenüber Übertragungsfehlern geringer als die oder gleich der zweiten Modulation gewährleistet, wobei jede Modulation der Liste eine Robustheit gegenüber Übertragungsfehlern mindestens gleich der Robustheit der bevorzugten Modulation gewährleistet; und
Auswahl (335) einer Modulation aus der Liste, die einen Rang gleich der Anzahl von Übertragungen hat;
und dass, wenn nach einer erfolgreichen Übertragung (336, 337, 338) eines Rahmens unter Verwendung einer ausgewählten Modulation, wenn die ausgewählte Modulation sich von der eine minimale Robustheit der Liste gewährleistenden Modulation unterscheidet (340), die Liste so verändert wird (341), dass jede Modulation niedrigeren Rangs als der minimale Rang der aus der Liste ausgewählten Modulation durch eine Modulation der von dem Protokoll definierten Einheit von Modulationen ersetzt wird, die eine Robustheit gegenüber den Übertragungsfehlern mindestens gleich der Robustheit der bevorzugten Modulation und höchstens gleich der Robustheit der ausgewählten Modulation gewährleistet.

2. Verfahren nach Anspruch 1, **dadurch gekennzeichnet, dass** jede ausgewählte Modulation gespeichert (339) und die Liste unter Berücksichtigung mindestens einer der gespeicherten ausgewählten Modulationen verändert wird.

3. Verfahren nach Anspruch 2, **dadurch gekennzeichnet, dass** die Modulation der Einheit von durch das Protokoll definierten Modulationen, die eine Robustheit gegenüber den Übertragungsfehlern mindestens gleich der Robustheit der bevorzugten Modulation und höchstens gleich der Robustheit der ausgewählten Modulation gewährleistet, die letzte gespeicherte Modulation oder eine Modulation ist, die ausgehend von Statistiken bestimmt wird, die an gespeicherten ausgewählten Modulationen berechnet werden.

4. Verfahren nach einem der vorhergehenden Ansprüche, **dadurch gekennzeichnet, dass** mindestens eine Modulation der Liste mehrmals in der Liste vorkommt.

5. Verfahren nach einem der vorhergehenden Ansprüche, **dadurch gekennzeichnet, dass** nach jeder Durchführung der Prozedur des Suchens von Unterträgern (32) die Liste neu initialisiert wird, so dass jede vom Protokoll definierte Modulation, die eine Robustheit gegenüber den Übertragungsfehlern mindestens gleich der Robustheit der bevorzugten Modulation gewährleistet, mindestens einmal in der Liste vorkommt.

6. Verfahren nach einem der vorhergehenden Ansprüche, **dadurch gekennzeichnet, dass** das Protokoll das Protokoll G3-PLC ist.

7. Vorrichtung (2, 3) zur Auswahl einer bei einer Übertragung eines Rahmens zwischen einer ersten und einer zweiten Netzvorrichtung (2, 3) zu verwendenden Modulation, wobei die Übertragung ein Powerline-Kommunikationsprotokoll verwendet, wobei die erste und die zweite Netzvorrichtung (2, 3) regelmäßig eine Suchprozedur von Unterträgern (32) durchführen, die es ermöglicht, für jeden Unterträger einer Einheit von durch das Protokoll definierten Unterträgern in einem für die Übertragung verwendeten Frequenzband zu bestimmen, ob der Unterträger eine ausreichende Zuverlässigkeit gemäß einem vorbestimmten Kriterium bietet, um Rahmenübertragungen zu erlauben, und eine bevorzugte Modulation abhängig von den eine ausreichende Zuverlässigkeit bietenden Unterträgern zu bestimmen, wobei jede Übertragung eines Rahmens eine robuste Übertragungsprozedur (33) anwendet, die im Fall des Scheiterns der Übertragung erlaubt, die Übertragung bis zu einer maximalen Anzahl von aufeinanderfolgenden Übertragungen zu wiederholen, **dadurch gekennzeichnet, dass** die Vorrichtung (2, 3) die folgenden Einrichtungen enthält:
Bestimmungseinrichtungen (333), um eine Anzahl für den Rahmen ausgeführter Übertragungen zu bestimmen;
Einrichtungen (334) zum Erhalt einer mindestens zwei unterschiedliche Modulationen enthaltenden Liste von Modulationen, die an die bevorzugte Modulation angepasst ist,
wobei die Liste so geordnet ist, dass eine in der Liste vor einer zweiten Modulation liegende erste Modulation eine Robustheit gegenüber Übertragungsfehlern geringer als die oder gleich der zweiten Modulation gewährleistet, wobei jede Modulation der Liste eine Robustheit gegenüber Übertragungsfehlern mindestens gleich der Robustheit der bevorzugten Modulation gewährleistet; und
Auswahleinrichtungen (335), um eine Modulation aus der Liste auszuwählen, die einen Rang gleich der Anzahl von Übertragungen hat;
und Änderungseinrichtungen (341), die eingesetzt werden, wenn nach einer erfolgreichen Übertragung (336, 337, 338) eines Rahmens unter Verwendung einer ausgewählten Modulation die ausgewählte Modulation sich von der Modulation unterscheidet (340), die eine minimale Robustheit der Liste gewährleistet, um die Liste so zu ändern, dass jede Modulation eines niedrigeren Rangs als der minimale Rang der ausgewählten Modulation in der Liste durch eine Modulation der Einheit von durch das Protokoll definierten Modulationen ersetzt wird, die eine Robustheit gegenüber den Übertragungsfehlern mindestens gleich der Robustheit der bevorzugten Modulation und höchstens gleich der Robustheit der ausgewählten Modulation gewährleistet.

8. Computerprogramm, **dadurch gekennzeichnet, dass** es Anweisungen enthält, um das Verfahren nach einem der Ansprüche 1 bis 6 durch eine Vorrichtung (2, 3) durchzuführen, wenn das Programm von einem Prozessor (21) der Vorrichtung ausgeführt wird.

9. Speichereinrichtungen, **dadurch gekennzeichnet, dass** sie ein Computerprogramm speichern, das Anweisungen zur Durchführung des Verfahrens nach einem der Ansprüche 1 bis 6 durch eine Vorrichtung (2, 3) enthält, wenn das Programm von einem Prozessor (21) der Vorrichtung ausgeführt wird.

## Claims

1. Method for selecting a modulation to be used in a transmission of a frame between a first and a second network device (2, 3), said transmission using a power-line communication protocol, the first and second network devices (2, 3) regularly implementing an adaptive tone mapping procedure (32) making it possible to determine, for each tone in a set of tones which are defined by said protocol in a frequency band used for said transmission, whether said tone offers a sufficient reliability according to a predetermined criterion for allowing transmissions of frames, and to determine a preferred modulation depending on said tones offering a sufficient reliability, each transmission of a frame applying a robust transmission procedure (33) making it possible, in the case of failure of said transmission, to reiterate said transmission up to a maximum number of successive transmissions, **characterized in that**:
the method comprises the following steps for each transmission of one and the same frame in the context of the robust transmission procedure (33):
determining (333) a number of performed transmissions for said frame;
obtaining (334) a list of modulations, comprising at least two different modulations, which is suitable for the preferred modulation, said list being ordered such that a first modulation preceding a second modulation in the list ensures a robustness against transmission errors which is smaller than or equal to the second modulation, each modulation from said list ensuring a robustness against the transmission errors which is at least equal to the robustness of the preferred modulation; and
selecting (335) a modulation from said list having a rank equal to said number of transmissions;
and **in that**, when, following a successful transmission (336, 337, 338) of a frame using a selected modulation, if the selected modulation is different (340) from the modulation from said list ensuring a minimum robustness, said list is modified (341) such that each modulation of lower rank than the minimum rank of the selected modulation in said list is replaced by a modulation from the set of modulations which are defined by said protocol ensuring a robustness against the transmission errors which is at least equal to the robustness of the preferred modulation and at most equal to the robustness of the selected modulation.

2. Method according to Claim 1, **characterized in that** each selected modulation is stored in memory (339) and said list is modified taking into account at least one of the selected modulations stored in memory.

3. Method according to Claim 2, **characterized in that** the modulation from the set of modulations which are defined by said protocol ensuring a robustness to the transmission errors which is at least equal to the robustness of the preferred modulation and at most equal to the robustness of the selected modulation is the last modulation stored in memory or a modulation determined on the basis of statistics computed on selected modulations stored in memory.

4. Method according to any one of the preceding claims, **characterized in that** at least one modulation from said list appears a plurality of times in said list.

5. Method according to any one of the preceding claims, **characterized in that**, following each implementation of the adaptive tone mapping procedure (32), said list is reinitialized such that each modulation defined by said protocol ensuring a robustness against the transmission errors which is at least equal to the robustness of the preferred modulation appears at least once in said list.

6. Method according to any one of the preceding claims, **characterized in that** said protocol is the G3-PLC protocol.

7. Device (2, 3) for selecting a modulation to be used in a transmission of a frame between a first and a second network device (2, 3), said transmission using a power-line communication protocol, the first and the second network devices (2, 3) regularly implementing an adaptive tone mapping procedure (32) making it possible to determine, for each tone from a set of tones which are defined by said protocol in a frequency band used for said transmission, whether said tone offers a sufficient reliability according to a predetermined criterion for allowing transmissions of frames, and to determine a preferred modulation depending on said tones offering a sufficient reliability, each transmission of a frame applying a robust transmission procedure (33) making it possible, in the case of failure of said transmission, to reiterate said transmission up to a maximum number of successive transmissions, **characterized in that** the device (2, 3) comprises the following means:
determination means (333) for determining a number of performed transmissions for said frame;
obtainment means (334) for obtaining an ordered list of modulations, including at least two different modulations, which is suitable for the preferred modulation, said list being ordered such that a first modulation preceding a second modulation in the list ensures a robustness against transmission errors which is smaller than or equal to the second modulation, each modulation from said list ensuring a robustness against the transmission errors which is at least equal to the robustness of the preferred modulation; and
selection means (335) for selecting a modulation from said list having a rank equal to said number of transmissions;
and modification means (341), implemented when, following a successful transmission (336, 337, 338) of a frame using a selected modulation, the selected modulation is different (340) from the modulation from said list ensuring a minimum robustness, for modifying said list such that each modulation of lower rank than the minimum rank of the selected modulation in said list is replaced by a modulation from the set of modulations which are defined by said protocol ensuring a robustness against the transmission errors which is at least equal to the robustness of the preferred modulation and at most equal to the robustness of the selected modulation.

8. Computer program, **characterized in that** it comprises instructions for implementing, by means of a device (2, 3), the method according to any one of Claims 1 to 6, when said program is executed by a processor (21) of said device.

9. Storage means, **characterized in that** they store a computer program comprising instructions for implementing, by means of a device (2, 3), the method according to any one of Claims 1 to 6, when said program is executed by a processor (21) of said device.
